# EUROPEAN PATENT SPECIFICATION

(11) **EP 1 547 098 B1**
(45) Date of publication and mention of the grant of the patent: **10.12.2008**
(21) Application number: 03748339.3
(22) Date of filing: 26.09.2003
(51) Int. Cl.: G21F 9/28

(54) **SURFACE TREATMENT OF CONCRETE**
OBERFLÄCHENBEHANDLUNG VON BETON
TRAITEMENT D'UNE SURFACE DE BETON

(30) Priority: 26.09.2002 GB 0222342
(43) Date of publication of application: 29.06.2005
(73) Proprietor: Nuclear Decommissioning Authority, Cumbria CA24 3HU (GB)
(72) Inventor: BROWN, Stephen, Christopher, Neil British Nuclear Fuels Plc, Risley Warrington WA3 6AS (GB); SPENCER, Julian, Timothy British Nuclear Fuels Plc, Risley Warrington WA3 6AS (GB); BENJAMIN, Andrew, William British Nuclear Fuels Plc, Risley Warrrington WA3 6AS (GB); THOMAS, Tristan, Goronwy British Nuclear Fuels Plc, Risley Warrington WA3 6AS (GB)
(74) Representative: Barker, Rosemary Anne
(86) International application number: PCT/GB2003/004168
(87) International publication number: WO 2004/029990

(56) References cited:
- EP-A- 0 653 762
- WO-A-95/09068
- GB-A- 2 316 528
- US-A- 5 780 806
- US-A- 6 056 827
- US-A1- 2002 134 770
- PATENT ABSTRACTS OF JAPAN vol. 015, no. 107 (P-1179), 14 March 1991 (1991-03-14) & JP 03 002595 A (SCIENCE & TECH AGENCY), 8 January 1991 (1991-01-08) cited in the application

## Description

The present invention concerns removal of a concrete or natural stone surface from inorganic non-metallic structures, in particular concrete structures, primarily though not exclusively for the purpose of removing radioactive contamination contained in surface layers.

### Discussion of the Prior art

In the nuclear industry surfaces of concrete structures may become contaminated with radionuclides. Common contaminants include uranium oxide, plutonium oxide, strontium-90, caesium-137 and cobalt-60. Typically this contamination is only present in a surface layer of concrete. Such layers may be around 1 to 4mm thick. By removal of such a surface layer the degree of contamination of a surface and of the structure as a whole may be greatly reduced. However, simple mechanical methods are unsuitable for use where a potential for contamination makes it desirable for an operator to be remote from a surface to be operated upon.

Various techniques are known for the surface removal of concrete, stone and similar surfaces. One such method is the heat treatment of a surface such as to degrade that surface and release a surface layer.

JP 3002595 describes the removal of a concrete surface layer by crushing due to the heat generated by the use of microwaves to irradiate a contaminated surface layer.

Prior published documents US 2002/134770, US 5,780,806, GB 2316528 and US 6,056,827 all disclose methods of removing a portion of a surface by irradiating a surface location with a focussed beam of laser light. Surface materials involved are concrete or metal or a surface coating on either of these.

WO 95/09068 in the field of photolithography discloses apparatus for focussing a beam of laser light onto a workpiece wherein a reflective mask is used to remove a lower power density part of the laser beam.

EP-A-0653762 describes a method using a laser to eject surface chips of concrete, thus causing surface removal, using a laser scanned across a surface in a raster scan. In such a method energy from laser light causes surface chips to break away due to generation of steam or thermal stresses below the surface thus effecting surface removal. This latter phenomenon of ejecting surface chips or flakes is known in the art as laser scabbling.

However, it has been found that some surfaces, including some types of concrete having aggregate therein, whilst successfully scabbling on a first scan, may fail to do so on areas which are adjacent a first scanned track.

### Summary of the invention

According to a first aspect of the present invention there is provided a method of removing a portion of a concrete surface or a natural stone surface as specified in claim 1.

According to a second aspect of the present invention there is provided an apparatus for removing a portion of a concrete surface or a natural stone surface as specified in claim 7.

The laser beam for use in the invention may have an uneven radiation power density across the beam. The laser beam may be alternatively described as laser light or laser radiation.

In a first embodiment of the invention the laser light may be obscured by a shadow mask. A shadow mask is a means whereby a portion of laser light incident upon the mask is substantially adsorbed by the mask or at least prevents that light from impinging upon the surface location. The shadow mask may adsorb all of a low power density portion of a laser beam.

In a second embodiment of the invention the laser light may be obscured by a reflective mask. A reflective mask is a means whereby a portion of laser light incident upon the mask is substantially reflected by the mask. The portion of laser light reflected by the mask may comprise most of a low power density portion of the laser beam. The reflection may redirect one portion of low power density laser light to another region of low power density laser light so as to create an additional higher power density portion of the laser beam.

The part of laser light reflected by the mask may comprise substantially all of a low power density part of the laser beam. The reflection may redirect the low power density laser light to a high power density portion of the laser beam.

Effectively, the method and apparatus according to the present invention may prevent laser light, which is below a threshold power density for causing scabbling to be incident alone on a surface to be treated. Thus, such low power density laser light may be either adsorbed before reaching the surface; intensified by reflection to combine with another low power density portion of the laser beam to form a portion which is above a threshold level to cause scabbling; or, redirected by reflection to combine with a portion of the laser beam which is already above a threshold to cause scabbling.

At least two problems have been found in the prior art with surface removal by scabbling using a laser. Both problems are associated with a non-uniform power distribution, for example, quasi-Gaussian, across a laser beam spot, in particular with the presence of lower power density parts of an incident beam of laser light on the surface to be treated. The part of a beam of laser light incident upon a surface that is above a critical energy or threshold power density for effecting scabbling gives rise to scabbling from the surface. However, a, usually peripheral part of an incident laser beam which is below the threshold power density, i.e. a part not subjecting a surface portion on which it is incident to a power density above a critical value, does not give rise to surface removal by scabbling. However, such a surface portion, and adjacent similarly un-scabbled areas, may be sufficiently affected by heating from the power of the incident laser beam that a number of processes may occur in the surface portion, such as relaxation, dehydration and chemical change. These processes can result in the affected surface no longer being amenable to subsequent surface removal by scabbling from incident laser light, even when that light is above the threshold power density for scabbling. That is at least when laser light is used in a manner whereby surface removal is otherwise effected by scabbling, i.e. the ejection of surface chips.

Furthermore a non-uniform power distribution across a laser beam incident upon a surface may result in differential surface removal by scabbling between surface portions where a highest and a lower energy, both of which are above the threshold power density, are incident. For this reason a channel with sloping sides may be formed in a surface by a scanned laser beam impinging perpendicular to a surface. A further, adjacent, scanned track, by such a perpendicular beam may result in laser light impinging upon a sloping surface portion resulting in a lower incident power density. The sloping sides may therefore cause an otherwise sufficient energy intensity, per unit area, i.e. power density to become insufficient, i.e. to fall below a threshold power density or to scabble less surface material. As a result a whole surface when scabbled using laser light may be uneven.

The term average power density, may be termed power density, energy intensity or average energy intensity, and is measured in watts (i.e. Joules per second) per square centimetre.

In addition, scabbling processes using lasers may cause explosive detachment of surface portions of a material being treated, as in the scabbling of concrete. To overcome shrapnel damage to the laser and associated optics, laser beams may be focussed through a relatively very small aperture, through which air may also be ejected under pressure so as to prevent ingress of debris. Such focussing may serve to increase the divergence of a laser beam, due to the surface to be treated being remote from the focus, and induce or increase a spread of power density within a spot of incident laser light.

The method and apparatus of the invention have been found to overcome or ameliorate the known problem of areas adjacent to a laser scabbled area resisting removal by scabbling on treatment with laser light of a power density with which the adjacent area was scabbled. In addition a surface modified according to the method of the invention can be more even than when treated in a known manner.

Masks of the invention may comprise an aperture. The aperture may be used for permitting a high power density part of a laser beam to pass through. Masks of the invention may be tubular. Masks of the invention may be circular in cross-section. Masks of the invention may be cylindrical. Masks of the invention may comprise one or more component parts. Masks of the invention may be of adjustable size. Masks of the invention may comprise an adjustable aperture.

Any aperture of a mask of the invention may have the same cross section as a part of the laser beam above a threshold power density for scabbling. A laser beam being focussed may change in cross section with distance. Any aperture of a mask of the invention may be the same shape as the shape of a given length of a part of the laser beam. The relevant given length of laser beam for determining shape may be the laser beam at the point or region respectively at which the shadow mask is placed.

Use of the method of the invention may comprise the steps of irradiating a surface, adjusting a mask aperture size to adsorb a part of the laser beam below a threshold power density for scabbling and irradiating a surface to cause scabbling.

Masks of the invention may comprise a high temperature resistant material. Masks of the invention may comprise metal or ceramic or combinations of metal and ceramic.

Shadow masks of the first aspect of the invention may comprise a non-reflective surface. The non-reflective surface may be black.

Reflective masks of the invention may preferably comprise a metal. The metal may be aluminium, steel, tungsten or stainless steel. Reflective masks of the invention may comprise a polished surface for causing reflection. Reflective masks of the invention may comprise a glass mirror. Reflective masks of the invention may include a non-reflective portion that may act as a shadow mask. The non-reflective portion of a reflective mask may be an end portion of the mask adjacent to the laser head.

Masks for use in the invention may be coated. The coating may be partial. Coatings may include coatings to adsorb laser light so as to for a shadow mask part and coatings to reflect laser light so as to form a reflective mask part.

When using the method and apparatus of the invention the laser beam impinging upon a surface portion may typically be moved over the surface, either continuously or discontinuously so as to treat a whole surface area by causing scabbling. Any suitable method for moving the laser beam relative to the surface being treated may be used including moving the laser, moving the object to be scabbled, moving a conduit (such as a fibre-optic cable) or optical methods such as mirrors and the like.

A laser light source for use in the invention may typically be of total power from 0.5 kW to 4 kW.

A threshold power density for surface removal by scabbling for concrete may typically be in the range of 50W/cm² to 80w/cm² , depending upon the surface to be treated, i.e. a value of 70W/cm² or thereabouts.

The average power density found in the method of the invention to produce optimum scabbling results for a Portland cement based concrete surface is of the order of 100W/cm², based upon sequential spotting of laser light using a 70mm diameter spot, and a treatment time of 15-20 seconds per spot with a 3kW YAG laser. The average power density used will increase when using smaller spots, and may be nearly double for a 40mm diameter spot using an equivalent laser. The optimum average power density for a spot of laser light represents a trade off between the area of a laser beam above a threshold power for scabbling, removal rate and removal efficacy (e.g. no melting or the leaving of adjacent areas potentially resistant to scabbling) among other factors.

The power of the laser, the size of the incident spot of laser light and the residence time of a spot of laser light are interrelated and for any given surface will be optimised so as to achieve most effective surface removal. The interrelationships of the above factors are governed by established physical laws known to the person skilled in the art.

A suitable laser source may be a Yttrium Aluminium Garnet (YAG) laser. Laser light sources for use in the invention may have a non-uniform power density in cross-section.

It has been found that concrete removal depths of about 1mm to 30mm may be achieved in one pass of laser light according to the method of the invention. However, this depth will generally not be consistent across the whole treatment spot, typically showing a crater type geometry particularly with deeper scabbling.

The laser beam may be transmitted to a delivery head by means of a fibre optic cable.

A delivery head for projecting a laser beam onto a surface to be treated may comprise focussing optics to focus the beam through a focal point. The optics may include means for changing the direction of the laser light through a right angle, for example. The beam and any optics may be shrouded up to the focal point. The shroud may be frusto-conical. After the focal point the beam may diverge before impinging upon a surface to be treated. In one embodiment of the method of the present invention the surface to be treated may be 270mm from the focal point when optics of focal length 120mm are used giving a spot of incident laser light of around 70mm on the surface to be treated. If the surface to be treated is 153mm from the focal point a spot size of around 40mm will impinge on the surface to be treated. Larger spot sizes are preferred as they give more reproducible results.

Suitable laser equipment for practising the invention is supplied by TRUMPF GmbH and Co.KG. of Stuttgart, Germany. The laser may be guided by a robotic arm.

The laser beam may effect surface removal by the effects of thermal shock. The method of the invention may give no or negligible surface removal by melting or vaporisation of the surface being treated.

The method may comprise a step of wetting the surface to be treated before irradiation with the laser beam.

The method may comprise a step of coating the surface to be treated before irradiation with laser light. Examples of suitable coatings are described in EP 0 653 762 A1.

The presence of radionuclides may affect the nature of the scabbling process and the adsorbtion of incident laser radiation.

The method of the invention will typically be used for decontamination in conjunction with fume extraction and other subsidiary protective processes to prevent the spread of any contamination, particularly where radioactivity is involved.

The surface for treatment according to the method of the invention is a concrete, i.e. a cement, e.g. a Portland cement matrix having aggregate therein, or a natural stone such as limestone, for example.

The requirements, features and integers of the method of the first aspect of the invention apply *mutatis mutandis* to the apparatus of the second aspect of the invention and *vice versa.*

In order that the present invention may be more fully understood, examples will now be given by way of illustration only, with reference to the accompanying drawings, in which:
Figure 1 shows a schematic representation of radiation power density across a laser beam;
Figure 2 shows a schematic representation of an incident spot of laser light;
Figure 3 shows a schematic representation of laser equipment suitable for use with an apparatus of and in the method of the invention;
Figure 4 shows a schematic representation of an apparatus of the invention;
Figure 5 shows a schematic representation of a shadow mask of a first embodiment of the invention;
Figure 6 shows a schematic representation of the effect of a shadow mask of a first embodiment of the invention upon a schematic representation of radiation power density across a laser beam;
Figure 7 shows a schematic representation of a second embodiment of the invention, a reflective mask; and
Figure 8, which shows a schematic representation of the effect of a shadow mask of a second embodiment of the invention upon a schematic representation of radiation power density across a laser beam.

In the accompanying figures like features are denoted by like reference numerals.

### Description of aspects of the invention

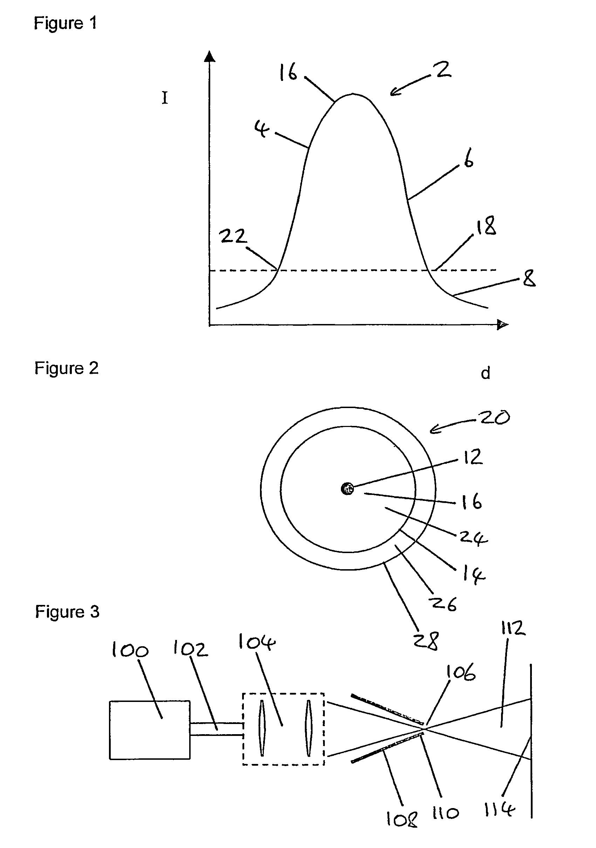

A beam of laser light may be non-uniform in power density across a width of the beam. A schematic representation of power density across a laser beam is shown in Figure 1. Figure 1 depicts a graph 2 with a y axis of radiation power density (I) and an x axis of distance (d) across the beam. The curve 4 describes a quasi-Gaussian type power distribution from which it may be seen that the laser beam has a central area 16 of highest power density. The curve may be divided into two portions, the boundary between being defined by a threshold power density 18. A portion 6 of the curve 4 above this threshold represents part of the laser beam capable of giving rise to scabbling of a surface, the portion 8 below represents an area not capable of giving rise to scabbling of such a surface. However, the low power density portion 8 may give rise to surface modification which makes the surface resistant to scabbling by subsequent passes with a laser beam having an power density above the threshold 18.

Figure 2 depicts a representation of a laser beam, of uneven power density profile, such as described in Figure 1 when impinged, orthagonally, upon a surface. The surface, such as one to be scabbled is represented here and in other diagrams by the plane of the paper. The spot of laser light 20 comprises a'centre point 12 of highest power density and an immediately surrounding area 16 of high power density. The centre point 12, and area 16, form part of area 24 wherein the light is above a threshold power density 18 for scabbling. Towards the periphery of the spot of laser light scabbling may be less effective (i.e. less material may be removed) until a boundary 14 is reached which corresponds to the threshold power density 18 for effecting scabbling, beyond which no scabbling occurs. A further area 26 of low incident energy exists between the first boundary 14 and a nominal outer boundary of the beam and is described by line 28 beyond which point the incident light power density is very low, such as may be due to scattering, for example.

A schematic representation of laser equipment suitable for use in the method of the invention is shown in Figure 3. A laser light source 100, emits laser light which may be channelled along a fibre optic channel 102 to focussing optics 104. The focussing optics comprise lenses to focus the laser light to a focus 106. The laser light is shrouded by a frusto conical shroud 108, one end 110 of which surrounds the focal point 106 of the laser light. The shroud serves to protect the optics and other components and forms part of an overall protective shroud (not shown) of the equipment. Compressed air is ejected through the end of the shroud 110 to also stop ingress of debris such as fumes and particles. Outside the equipment the laser light diverges 112 and impinges upon a surface to be treated 114.

The laser equipment may be mounted on a robotic arm for movement about a surface to be scabbled. Alternatively a robotic arm may move a laser head for emitting laser light on to a surface to be scabbled wherein the head is connected to a stationary laser source by a fibre optic cable.

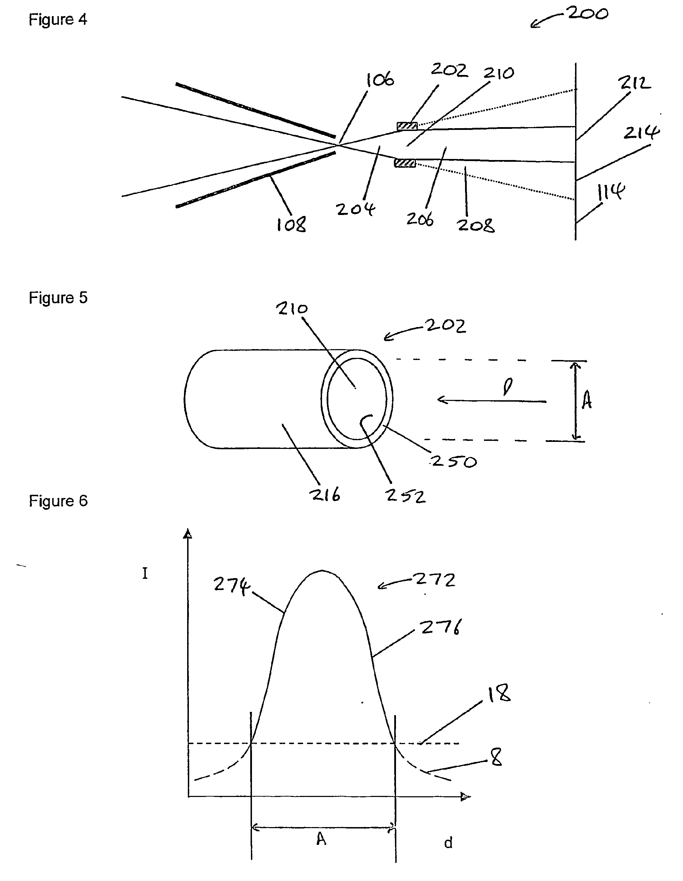

Figure 4 shows a schematic representation of an apparatus 200 of the invention. Laser light from a laser source is brought to a focus 106 at which point the light leaves the protective shroud 108 and begins to diverge. As the light diverges it impinges upon a shadow mask 202 comprising a hollow cylinder through which the laser light 204 partially passes. The laser light 204 impinges upon the mask and is partly adsorbed and hence a part of the divergent beam 208 which would otherwise impinge upon the surface 114 does not impinge. This part of the beam is a part that is below a threshold power density for scabbling and would therefore not scabble surface 114 in annular region 214. Another part 206 of the laser light 204 does not impinge upon shadow mask 202 and passes through a central aperture 210 in the shadow mask and so that this part 206 of the laser light 204 impinges upon the surface 114. The part of the laser light 206 which passes through the mask is all of a power density greater than a threshold power density for causing scabbling and thus the surface 114 is scabbled in a circular region 212 of surface 114.

The apparatus of the invention thus enables a method of conditioning laser light for the scabbling of a surface whereby the component 214 of laser light below a threshold power density is prevented from impinging upon a surface by means of a shadow mask. An area of a surface being scabbled which is modified by laser light not intense enough to give rise to scabbling but which could have otherwise affected the surface such that scabbling may be prevented by more intense laser light is, therefore, not created. Thus the efficiency of surface removal by scabbling is increased by use of the method and apparatus according to the present invention.

Figure 5 shows a schematic representation of a shadow mask 202 of a first embodiment of the invention. The shadow mask comprises a hollow cylinder 216. Incoming, divergent, laser light in direction D may be obscured by the end wall 250 of the cylinder or the cylinder bore 252. In the example, the cylinder is elongate and is composed of a mass of around a kilogram of aluminium metal, optionally with a black coating, for use with a laser of 4kw intensity. However, the cylinder may be composed of any suitable metal. The diameter of the bore of the cylinder is 7cm with wall thickness 1cm. The shadow mask may be attached to the apparatus by brackets, stays or other means (not shown). The physical mass of the shadow mask enables a relatively high energy to be adsorbed from the incoming laser light before any thermal degradation of the mask occurs. In addition the shadow mask is preferentially robust so as to withstand the impact of any debris from the scabbling process.

The mask 202 may be cooled, for example, by a water jacket if desired.

The shadow mask may alternatively be made of a ceramics material.

Figure 6 shows a schematic representation of the effect of a shadow mask of a first aspect of the invention as depicted in Figure 4 upon a schematic representation of radiation power density across a laser beam as depicted in Figure 1. Figure 6 depicts a graph 272 with a y axis of radiation power density (I) and an x axis of distance (d) across the beam. The curve 274 describes the power density profile of laser light after passing through a shadow mask 202 of the invention. Central portion 276, a portion of power density above a threshold power density 18 for causing scabbling is unaffected by passing through the aperture 210 of the shadow mask of Figure 5. However, low power density light, below the threshold power density for causing scabbling is adsorbed by the mask 202 and cannot, therefore, impinge upon the surface to be scabbled. The low power density light is no longer present as it has been obscured by the shadow mask. The width of the beam A after passing the mask is substantially the same as the aperture A of the mask on the side of the mask away from the laser source.

In practice aperture width A may not correspond exactly to the points on curves 4 and 274 where the curves intersect the line of threshold power density for causing scabbling 18. However, the shadow mask aperture will not normally be greater than the above distance, which defines the width of the laser beam, which is above the threshold power density for causing scabbling.

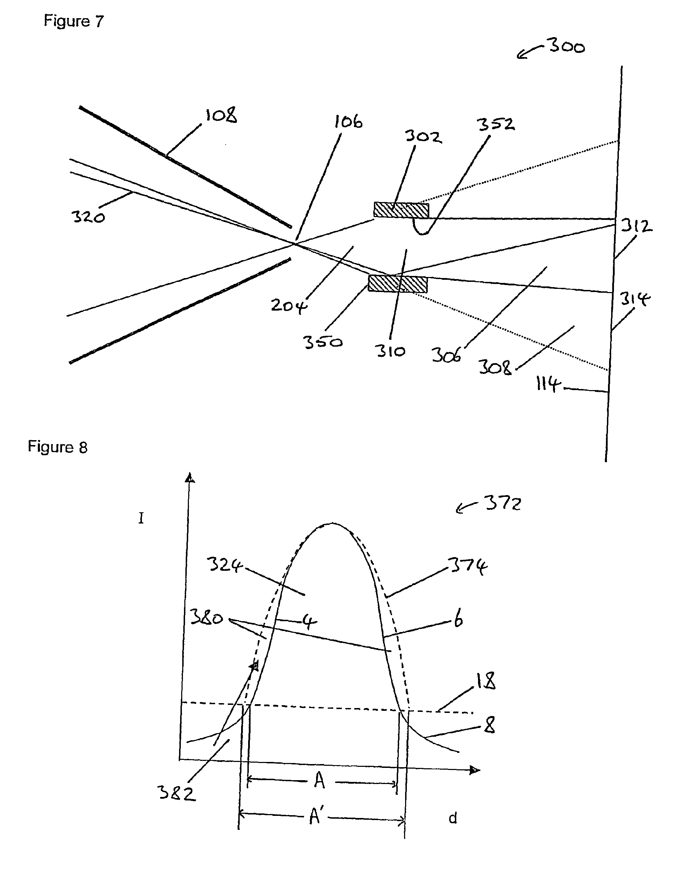

Figure 7 shows a schematic representation 300 of a further embodiment of the invention involving the use of a reflective mask. Laser light from a laser source comes to a focus 106 and exits the protective shroud 108. the light then diverges before impinging upon the reflective mask 302. A part of the divergent laser light 204 no longer continues on in a region 308 that it would otherwise occupy and similarly fails to impinge upon, is obscured from, the surface to be scabbled in annular region 314. This part of the laser light which no longer continues is a lower energy portion of the laser light below a threshold power level density for causing scabbling. The surface 114 is no longer potentially modified in region 314 such that scabbling by laser light of power density above the threshold power density for scabbling may not give rise to scabbling of the surface 114. However, the part of the laser light which would form annular region 314 is reflected by the internal surface of the mask 302 to a central region of the incident laser beam 306 and impinges upon the surface to be scabbled in region 312. Some laser energy may be adsorbed by the mask 302, but however, most of the energy which would otherwise have impinged on annular region 314 is reflected so as to fall on the region 312. Another part of the laser light already above a threshold power density for scabbling passes through the aperture 310 of the reflective mask and impinges upon and scabbles the surface 114 in circular region 312.

The effect of the reflective mask is further illustrated in Figure 7 by considering an incoming ray 320 of laser light which is part of a region of the laser beam below a threshold power density for causing scabbling. The ray 320 passes through the focus 106 and as the light as a whole diverges the ray impinges upon the bore 352 of the reflective mask 302. The ray is then reflected back towards the central part 306 of the laser beam and impinges upon the surface to be scabbled 114 in a region being scabbled 312. Thus a portion of a laser beam otherwise ineffective for scabbling a surface contributes to such scabbling.

A significant benefit of this aspect of the invention is that low power density laser light is no longer lost or wasted by adsorbtion but is substantially reflected and reinforces the laser light capable of causing scabbling thus increasing the efficiency of the apparatus and providing a more effective method of scabbling a surface.

In the example, the reflective mask 302 comprises a hollow cylinder and is composed of a mass of around a kilogram of aluminium metal for use with a laser of 4kw intensity. The diameter of the bore of the cylinder is 7cm with wall thickness 1cm. The bore of the reflective mask is polished to improve reflectivity. The reflective mask may be attached to the apparatus by brackets, stays or other means (not shown). The physical mass of the shadow mask enables energy to be adsorbed from the incoming laser light before any thermal degradation of the mask occurs. In addition the reflective mask is sufficiently robust so as to withstand the impact of any debris from the scabbling process. The end face 350 of the reflective mask 350 adjacent to the laser source may be made adsorbent to laser light to avoid reflection of laser light back at the apparatus. Alternatively, the reflective mask may be made of polished stainless steel or any other suitable materials such as a cylindrical mirror, for example.

Figure 8 which shows a schematic representation of the effect of a shadow mask of the invention as depicted in Figure 7 upon a schematic representation of radiation power density across a laser beam as depicted in Figure 1.

Figure 8 depicts a graph 372 with a y axis of radiation power density (I) and an x axis of distance (d) across the beam. The curve 374 describes the power density profile of laser light after passing through reflective mask 302 of the invention. Curve 4 depicts the laser light power density across a laser beam before the light impinges upon the reflective mask 302. Low power density portion 8 of the laser light incident upon the reflective mask is substantially reflected by the bore 352 of the reflective mask 302 into central region 324 of width A' (c.f. 306) and accounts for the difference in power 380 beneath power density curve 374 after the reflective mask and beneath the central part 6 of power density curve 4 before the reflective mask. This difference 380 represents an increase in power efficiency of the apparatus and hence effectiveness of the method of laser scabbling attributable to the second aspect of the invention. The second aspect of the invention therefore not only removes the low power density portion of a laser beam by obscuring it from the surface but redirects that part of the beam so as to enhance that part of the laser beam that can, or can as a result of the redirection, scabble the surface.

It will be noted from Figure 8 that by redirection of the low power density part of the laser beam that the effective diameter of the beam having a threshold power level above that power density indicated at 18 in Figure 8 is increased from 'A' to 'A''. Thus, the method and apparatus of the present invention makes more efficient use of the available energy in the laser beam.

The dimensions of aperture 310 of the reflective mask 302 need not correspond exactly to the dimensions corresponding to the distance A between the points on incoming laser light power density curve 4 where the curve meets the line of threshold power density for scabbling 18. Instead the diameter of aperture 310 of the reflective mask 302 may be A' a dimension greater than A. However, the reflective mask aperture 310 will not normally be significantly greater than the above distance A which defines the width of the laser beam which is above the threshold power density for scabbling before the beam impinges upon the reflective mask. It is noted that the increase in power density of the central part of the laser light 324, as depicted by curve 374, means that the points where line 18 of threshold power density for scabbling meet the curve 374 will be further apart (A') than the corresponding distance (c.f. A) of points 22 on a graph 2 of incoming laser light before the reflective mask. The diameter of the aperture of a reflective mask may therefore be a dimension equal to the distance between the effective width of a reflectively masked laser beam, which is above a threshold power for surface removal by scabbling.

## Claims

1. A method of removing a portion of a concrete surface or a natural stone surface by producing a beam of laser light and irradiating a surface location with the laser light, **characterised by** using mask means (202; 302) to remove a low power density part of the laser beam that is below a threshold power density for surface removal before irradiating the surface location.

2. A method of treating a surface according to claim 1 wherein that part of the laser beam below the threshold power density is removed by being obscured by a shadow mask (202).

3. A method of treating a surface according to claim 2 wherein the shadow mask (202) adsorbs substantially all of that part of the laser beam that is below the threshold power density.

4. A method of treating a surface according to claim 1 wherein that part of the laser beam below the threshold power density is removed by a reflective mask (302) such that light incident upon the mask is reflected by the mask.

5. A method of treating a surface according to claim 4 wherein the reflection redirects low power density laser light to another low power density portion of the laser beam so as to create an additional high power density portion of the laser beam.

6. A method according to any preceding claim wherein the surface portion is removed by the effects of thermal shock.

7. An apparatus for removing a portion of a concrete surface or a natural stone surface by irradiation with laser light, the apparatus comprising a laser source for producing a laser beam for irradiating a surface location, **characterised in that** mask means (202; 302) is provided to remove a lower power density part of the laser beam.

8. An apparatus according to claim 7 wherein the mask means comprises a shadow mask (202) to adsorb 'low intensity' radiation.

9. An apparatus according to claim 7 wherein the mask means comprises a reflective mask (302) to redirect at least a part of the 'low intensity' portion of the radiation.

10. An apparatus according to any on of claims 7, 8 or 9 wherein the mask (202; 302) is provided with an aperture (210; 310) such that a high power density part of a laser beam passes through the aperture.

## Patentansprüche

1. Verfahren zum Entfernen eines Teils einer Betonoberfläche oder einer Natursteinoberfläche, indem ein Laserlichtstrahl erzeugt und ein Ort der Oberfläche mit Laserlicht bestrahlt wird, **dadurch gekennzeichnet, daß** Maskenmittel (202;302) verwendet werden, um einen Teil des Laserstrahls, der eine niedrige Leistungsdichte hat, welche unter einer für die Oberflächenentfernung gegebenen Schwellwertleistungsdichte liegt, entfernt wird, bevor der Ort der Oberfläche bestrahlt wird.

2. Verfahren zum Behandeln einer Oberfläche gemäß Anspruch 1, wobei der Teil des Laserstrahls unter der Schwellwertleistungsdichte durch Abschatten mit einer Schattenmaske (202) entfernt wird.

3. Verfahren zum Behandeln einer Oberfläche nach Anspruch 2, wobei die Schattenmaske (202) im wesentlichen den gesamten Teil des Laserstrahls absorbiert, der unter der Schwellwertenergiedichte liegt.

4. Verfahren zum Behandeln einer Oberfläche nach Anspruch 1, **dadurch gekennzeichnet, daß** ein Teil des Laserstrahls, der unterhalb der Schwellwertleistungsdichte liegt, durch eine reflektive Maske (302) entfernt wird, so daß auf die Maske einfallendes Licht von der Maske reflektiert wird.

5. Verfahren zum Behandeln einer Oberfläche nach Anspruch 4, wobei die Reflektion Laserlicht mit niederer Leistungsdichte auf einen weiteren Teil des Laserstrahls mit niederer Leistungsdichte reflektiert, um einen zusätzlichen Teil des Laserstrahls mit hoher Leistungsdichte zu erzeugen.

6. Verfahren nach einem der vorherigen Ansprüche, wobei der Teil der Oberfläche durch die Thermoschockwirkungen entfernt wird.

7. Vorrichtung zum Entfernen eines Teils einer Betonoberfläche oder einer Natursteinoberfläche durch Bestrahlung mit Laserlicht, wobei die Vorrichtung eine Laserquelle zum Erzeugen eines Laserstrahls zum Bestrahlen eines Ortes der Oberfläche aufweist, **dadurch gekennzeichnet, daß** Maskenmittel (202;302) vorgesehen sind, um einen Teil des Laserstrahls, der niedrige Leistungsdichte hat, zu entfernen.

8. Vorrichtung nach Anspruch 7 wobei die Maskenmittel eine Schattenmaske (202) aufweisen, um "niedriger Intensität" Strahlung zu absorbieren.

9. Vorrichtung nach Anspruch 7, wobei die Maskenmittel eine reflexive Maske (302) aufweisen, um mindestens einen Teil des "niedriger Intensität" Teils der Strahlung umzuleiten.

10. Vorrichtung nach einem der Ansprüche 7, 8 oder 9, wobei die Maske (202;302) mit einer Öffnung (210;310) versehen ist, so daß ein Teil des Laserstrahls, der hohe Leistungsdichte hat, durch die Öffnung tritt.

## Revendications

1. Procédé de retrait d'une partie d'une surface de béton ou d'une surface de pierre naturelle en produisant un faisceau de lumière laser et en irradiant un emplacement de surface avec la lumière laser, **caractérisé par** l'utilisation de moyens de masquage (202 ; 302) pour retirer une partie de faible densité de puissance du faisceau laser qui est au-dessous d'une densité de puissance de seuil pour le retrait de surface avant d'irradier l'emplacement de surface.

2. Procédé de traitement d'une surface selon la revendication 1, dans lequel la partie du faisceau laser au-dessous de la densité de puissance de seuil est retirée en étant cachée par un masque perforé (202).

3. Procédé de traitement d'une surface selon la revendication 2, dans lequel le masque perforé (202) adsorbe sensiblement la totalité de la partie du faisceau laser qui est au-dessous de la densité de puissance de seuil.

4. Procédé de traitement d'une surface selon la revendication 1, dans lequel la partie du faisceau laser au-dessous de la densité de puissance de seuil est retirée par un masque réfléchissant (302) de sorte qu'une lumière frappant le masque soit réfléchie par le masque.

5. Procédé de traitement d'une surface selon la revendication 4, dans lequel la réflexion redirige une lumière laser de faible densité de puissance vers une autre partie de faible densité de puissance du faisceau laser de manière à créer une partie de forte densité de puissance supplémentaire du faisceau laser.

6. Procédé selon l'une quelconque des revendications précédentes, dans lequel la partie de surface est retirée par les effets d'un choc thermique.

7. Dispositif pour retirer une partie d'une surface de béton ou d'une surface de pierre naturelle par irradiation d'une lumière laser, le dispositif comprenant une source de laser pour produire un faisceau laser pour irradier un emplacement de surface, **caractérisé en ce que** des moyens de masquage (202 ; 302) sont prévus pour retirer une partie de plus faible densité de puissance du faisceau laser.

8. Dispositif selon la revendication 7, dans lequel les moyens de masquage comprennent un masque perforé (202) pour adsorber un rayonnement de 'faible intensité'.

9. Dispositif selon la revendication 7, dans lequel les moyens de masquage comprennent un masque réfléchissant (302) pour rediriger au moins une partie de la partie de 'faible intensité' du rayonnement.

10. Dispositif selon l'une quelconque des revendications 7, 8 ou 9, dans lequel le masque (202 ; 302) est pourvu d'une ouverture (210 ; 310) de sorte qu'une partie de forte densité de puissance d'un faisceau laser passe à travers l'ouverture.
